# EUROPÄISCHE PATENTANMELDUNG

(11) **EP 1 736 216 A2**
(43) Veröffentlichungstag der Anmeldung: **27.12.2006**
(21) Anmeldenummer: 06114434.1
(22) Anmeldetag: 23.05.2006
(51) Int. Cl.: B01D 1/22, B01D 1/10, B01D 1/06, B01D 1/30

(54) **Verfahren und Vorrichtung zur Verdampfung thermisch empfindlicher Stoffe**

(30) Priorität: 17.06.2005 DE 102005028032
(71) Anmelder: BASF AKTIENGESELLSCHAFT, 67056 Ludwigshafen (DE)
(72) Erfinder: Kaibel, Gerd, 68623 Lampertheim (DE); Neumann, Dirk, 68163 Mannheim (DE)

(57) **Zusammenfassung**

Verfahren zur Verdampfung thermisch empfindlicher Stoffe, dadurch gekennzeichnet, dass man die Verdampfung in einem Verdampfer mit porös strukturierter Oberfläche durchführt, wobei man die Temperaturdifferenz zwischen der produktseitigen Oberfläche des Verdampfers und der Temperatur des verdampfenden Produkts auf 0,1 bis 10°C begrenzt.

## Beschreibung

Die Erfindung betrifft ein Verfahren zur schonenden Verdampfung thermisch empfindlicher Stoffe oder Stoffgemische. Weiterhin betrifft sie eine Vorrichtung zur Durchführung des erfindungsgemäßen Verfahrens.

Nach dem Stand der Technik werden zur Verdampfung von Flüssigkeiten oder Flüssigkeitsgemischen Verdampfer verschiedener Bauarten eingesetzt. Übliche Konstruktionen sind beispielsweise Naturumlauf- oder Zwangsumlaufverdampfer, Zwangsumlaufentspannungsverdampfer, Kletterfilmverdampfer, Fallfilmverdampfer, Dünnschichtverdampfer oder Kurzwegverdampfer. Die Geometrie der Verdampfungsfläche kann in verschiedener Weise ausgeführt werden. Verbreitet sind Rohrbündelapparate, in denen die Verdampfung entweder auf der Innenseite oder der Außenseite der Rohre stattfindet. Ferner finden Plattenapparate mit spiralig gewickelter oder überwiegend ebener Oberfläche Anwendung. Bei Dünnschichtverdampfern wird die Innenfläche von Rohren mit großem Durchmesser genutzt, wobei die Flüssigkeit durch Wischelemente auf der Verdampferfläche gleichmäßig verteilt wird.

Aus Kostengründen setzt man bevorzugt Naturumlauf- oder Zwangsumlaufverdampfer ein. Plattenapparate bieten gegenüber Rohrbündelapparaten weitere Kostenvorteile.

Eine Sonderform stellen Verdampfer dar, deren Oberfläche zur Verbesserung des Wärmeübergangs mit porösen Strukturen versehen sind. Eine technisch verbreitete Bauform sind porös beschichtete Rohre der Fa. UOP (UOP LLC, Des Plaines, IL, 60017-5017, USA) mit der Bezeichnung "High-Flux Tubes" oder Rohre mit mikrostrukturierter Oberfläche der Fa. Wieland (Wieland-Werke AG, D-89070 Ulm) mit der Bezeichnung "Enhanced Boiling Tubes". Hier dienen entweder stochastisch verteilte Poren (UOP) oder mechanisch gezielt aufgebrachte poröse Mikrostrukturen (Wieland), wie beispielsweise in EP 0607839 beschrieben, der Verbesserung des Wärmeübergangs bei der Verdampfung. Die porösen Mikrostrukturen bzw. die stochastisch verteilten Poren wirken vergleichbar den in der chemischen Laborpraxis verwendeten Siedesteinchen und lösen die Bildung von Dampfblasen bereits bei sehr kleinen Temperaturdifferenzen von etwa 2 bis 5°C aus. Bei einer glatten Verdampferfläche werden je nach geometrischer Ausgestaltung der Verdampferfläche größere Temperaturdifferenzen von etwa 10°C und mehr benötigt. Die Porengröße der Mikrostrukturen liegt im Bereich von etwa 1 bis 500 Mikrometern.

Die kleineren Temperaturdifferenzen für die Wärmeübertragung eröffnen bessere Chancen für Wärmeverbundmaßnahmen zwischen den einzelnen Prozessströmen und dienen somit der Senkung des Energieverbrauchs von Gesamtverfahren. Bei einer mechanischen Brüdenverdichtung zur Beheizung des Verdampfers können sie infolge der verkleinerten Temperaturdifferenz die benötigte Antriebsleistung wirksam verringern. Derartige Verdampfer werden bei Basischemikalien, wie Ethylen, Propylen, C₂-, C₃- und C₄-Kohlenwasserstoffen (LPG, LNG), Aromaten, wie Benzol, Toluol und Xylol, und anderen Kohlenwasserstoffen, bei Ethylenglykol, Methyltertiärbutylether und Ammoniak eingesetzt, was beispielsweise in Firmenprospekten der Firmen Wieland-Werke AG und UOP LLC geschildert wird. Hierbei handelt es sich um kleine Moleküle mit relativ hohen Dampfdrücken, bei denen bei der Trennung kein hohes Vakuum angewendet werden muss, um eine thermische Zersetzung zu vermeiden.

Bei der Verdampfung thermisch sensitiver Produkte hingegen werden derartige Verdampfer nicht eingesetzt. Unter thermisch empfindlichen Produkten versteht man hierbei relativ hoch siedende Stoffe, deren Siedepunkte bei Normaldruck oberhalb von etwa 150°C liegen und die zur Vermeidung von Produktschädigungen unter reduziertem Druck von beispielsweise 0,5 bis 100 mbar verdampft werden. Beispiele für derartige Produkte sind Vitamin E, Riechstoffe und andere Feinchemikalien und Zwischenprodukte. Gemäß der üblichen Praxis werden hier im Gegenteil Apparate mit besonders glatten Oberflächen ohne Spalte und Zwischenräume eingesetzt. Grund ist die Erfahrung, dass bei thermisch sensitiven Produkten eine längere Verweilzeit infolge einer breiten Verweilzeitverteilung zu Qualitätseinbußen führt. Diese Qualitätseinbußen zeigen sich beispielsweise in störenden geruchlichen oder geschmacklichen Veränderungen, speziell bei Riech- und Geschmacksstoffen, in Farbänderungen, beispielsweise der Gelbfärbung ansonsten farbloser Produkte, in Veränderungen des Schmelzpunktes, in der Beeinträchtigung der Polymerisationseigenschaften, der Bildung hochsiedender Rückstände und Änderung sonstiger Produktspezifikationen, beispielsweise der UV-Absorption, oder der Zersetzung der Stoffe.

Es stellte sich die Aufgabe, ein verbessertes Verfahren zur Verdampfung thermisch sensitiver Produkte zu finden, bei welchem das Produkt bei bereits relativ niedrigen Wandtemperaturen verfahrenstechnisch einfach und ohne Qualitätseinbußen verdampft werden kann. Weiterhin sollte im Fall des Einsatzes des erfindungsgemäßen Verdampfungsverfahrens bei Destillationskolonnen eine Anhebung des Betriebsdruckes ermöglicht werden, wodurch der apparative Aufwand aufgrund kleinerer Apparate (Verringerung des benötigten Kolonnendurchmessers) verringert werden kann. Demgemäß wurde ein Verfahren zur Verdampfung thermisch empfindlicher Stoffe gefunden, welches dadurch gekennzeichnet ist, dass man die Verdampfung in einem Verdampfer mit produktseitig porös strukturierter Oberfläche durchführt, wobei man die Temperaturdifferenz zwischen der produktseitigen Oberfläche des Verdampfers und der Temperatur des verdampfenden Produkts auf etwa 0,1 bis 10°C begrenzt.

Die Möglichkeit des Einsatzes von Verdampfern mit produktseitig porös strukturierten Oberflächen bei der Handhabung von thermisch sensitiven Produkten hätte der Fachmann nicht in Erwägung gezogen. Man bemühte sich zwecks Vermeidung einer breiten Verweilzeitverteilung und der damit zu erwartenden Qualitätsverringerung bei thermisch sensitiven Produkten gerade darum, tiefe Spalte an Dichtflächen, beispielsweise Apparateflanschen, oder Toträume, beispielsweise an Messfühlern, zu vermeiden. Die Apparateoberflächen werden daher üblicherweise bevorzugt aus poliertem Edelstahl ausgeführt, selbst wenn keine Korrosionsbeanspruchung vorliegt.

Die erfindungsgemäße, produktseitig porös strukturierte Oberfläche in dem Verdampfer weist zahlreiche regelmäßig oder stochastisch angeordnete Poren auf. Der Porengröße der etwa kreisförmig oder auch in anderen Geometrien vorliegenden Poren beträgt etwa 1 bis 500 Mikrometer. Der Porenanteil an der Oberfläche kann dabei etwa 1 bis 80 %, bevorzugt etwa 10 bis 50 %, betragen. Die Porentiefe entspricht bei einer regellosen Anordnung der Poren etwa dem Porendurchmesser. Bei einer mechanischen Anbringung der Poren kann man von der eher runden Porenform auf beliebige geometrische Formen, beispielsweise auch Längskanäle, übergehen. Die Tiefe der Poren bzw. Vertiefungen ist dabei unabhängig von der Porenbreite. Beispiele derartigen Porenstrukturen sind in EP 0607839, DE 102 10 016 und DE 44 04 357 beschrieben. DE 101 56 374 beschreibt beispielhaft ein Verfahren zur Herstellung derartiger poröser Strukturen.

Durch das erfindungsgemäße Verfahren ist es möglich, die Wandtemperatur, bei welcher die thermisch sensitiven Produkte verdampft werden, nachhaltig zu verringern. Führte man Verdampfungen solcher Produkte bisher aus Gründen der Temperaturbegrenzung bei sehr niedrigen Drücken von etwa 1 bis 10 mbar und Temperaturdifferenzen zwischen der produktseitigen Oberfläche des Verdampfers und der Temperatur des verdampfenden Produkts von 15 bis 25°C durch, so kann man jetzt erfindungsgemäß diese Temperaturdifferenz auf etwa 0,1 bis 10°C verringern. Dies entspricht einer erzielbaren Temperaturabsenkung bei dem verdampfenden Produkt um etwa 10 bis 30°C. Somit kann die Produktqualität nachhaltig gesteigert werden.

In einer vorteilhaften Ausführungsform betreibt man bei der Behandlung thermisch sensitiver Produkte in einer Destillationskolonne den Sumpfverdampfer nach dem erfindungsgemäßen Verfahren, verwendet also auch hier bei der Verdampfung porös strukturierte Oberflächen. Hier ist es unter Beibehaltung des Temperaturniveaus vorteilhafterweise möglich, den Betriebsdruck in der Destillationskolonne zu erhöhen. Dies ermöglicht, bei gleichen Anforderungen Destillationskolonnen mit kleinerem Durchmesser einzusetzen.

Die Wirksamkeit des erfindungsgemäßen Verfahrens und die hierbei ermöglichte Absenkung der Wandtemperatur wird von den jeweils vorliegenden Rahmenbedingungen (eingesetzte Stoffe, genaue Ausgestaltung der porös strukturierten Oberfläche, Art des eingesetzten Verdampfers) vorgegeben und kann vom Fachmann experimentell geklärt werden. Beispielsweise bei Riech- und Geschmacksstoffen können je nach tatsächlich vorliegenden Verbindungen unterschiedliche Spurenverunreinigungen zu einer Qualitätseinbuße führen. Auch bei störenden Produktverfärbungen ist die Ursache hierfür oft einer Mischung mehrerer, in der Regel nur in Spuren vorhandenen Verbindungen zuzuordnen. In einigen Fällen sind auch katalytische Effekte der heißen Verdampferoberfläche festzustellen. Es ist daher nötig, die Wirksamkeit des erfindungsgemäßen Verfahrens zur Verbesserung der Produktqualität aufgrund der Absenkung der Wandtemperatur experimentell zu ermitteln. Hierzu hat sich als praktikable Maßnahme folgende Vorgehensweise bewährt. In einem diskontinuierlichen Laborversuch wird in einem Rührbehälter die zu prüfende Substanz (das später zu verdampfende, thermisch sensitive Produkt) zusammen mit einer Materialprobe, die dem vorgesehenen Verdampfermaterial (mit der entsprechend porös strukturierten Oberfläche) entspricht, bei der vorgesehenen Verdampfungstemperatur behandelt. Der Druck wird so eingestellt, dass keine Verdampfung stattfindet. Nach verschiedenen Zeiten werden Proben der zu prüfenden Substanz entnommen und hinsichtlich ihrer Qualität geprüft. Die Maximalzeit für die thermische Beanspruchung bei noch akzeptabler Produktqualität wird ermittelt. Anschließend wird der Versuch bei einer um 15°C verringerten Temperatur wiederholt, und die zulässige Maximalzeit wird ebenfalls ermittelt. An Anhaltswert kann gelten, dass die Verwendung eines Wärmetauschers mit porös strukturierter Oberfläche dann aussichtsreich ist, wenn die zulässige Maximalzeit bei der verringerten Temperatur um mindestens den Faktor 2 höher ist. Die längere Maximalzeit trägt der breiteren Verweilzeitverteilung bei porös strukturierten Oberflächen Rechnung.

Zur Verringerung der Verweilzeit empfiehlt es sich, bei der Verwendung porös strukturierter Oberflächen bevorzugt Fallfilmverdampfer anstelle von Umlaufverdampfern einzusetzen, da hier aufgrund besonders niedriger Verweilzeiten des Produkts im Fallfilmverdampfer eine hohe Produktqualität besonders gut gewährleistet wird. Die Fallfilmverdampfer können in üblicher Weise als Rohrbündelapparate oder auch als Plattenapparate ausgeführt werden.

Bei besonders hohen Anforderungen können bevorzugt auch Dünnschichtverdampfer mit Wischblättern mit porös strukturierten Oberflächen ausgestattet und eingesetzt werden.

### Beispiel:

Die Destillation eines thermisch sensitiven C₂₀ - Alkohols wird in einer Trennwandkolonne mit 2 Seitenabzügen vorgenommen. Bei einem Kopfdruck von 3.4 mbar und einer Sumpftemperatur von 189.5°C ergibt sich ein optimaler Kolonnendurchmesser von 3.6 m. Eine Verringerung des treibenden Temperaturgefälles im Sumpfverdampfer (Überhitzung) um 6°C ermöglicht eine Verdoppelung des Kopfdrucks auf 6.8 mbar und resultiert in einem optimalen Durchmesser von nur noch 3.0 m.

## Patentansprüche

1. Verfahren zur Verdampfung thermisch empfindlicher Stoffe, **dadurch gekennzeichnet, dass** man die Verdampfung in einem Verdampfer mit produktseitig porös strukturierter Oberfläche durchführt, wobei man die Temperaturdifferenz zwischen der produktseitigen Oberfläche des Verdampfers und der Temperatur des verdampfenden Produkts auf 0,1 bis 10°C begrenzt.

2. Verfahren nach Anspruch 1, **dadurch gekennzeichnet, dass** man als Verdampfer einen Fallfilmverdampfer einsetzt.

3. Verfahren nach Anspruch 1, **dadurch gekennzeichnet, dass** man als Verdampfer einen Dünnschichtverdampfer einsetzt.

4. Fallfilmverdampfer zur Durchführung des Verfahrens gemäß Anspruch 2, wobei die Verdampferrohre produktseitig eine porös strukturierte Oberfläche aufweisen.
